# EUROPEAN PATENT SPECIFICATION

(11) **EP 3 366 498 B1**
(45) Date of publication and mention of the grant of the patent: **29.07.2020**
(21) Application number: 16916393.8
(22) Date of filing: 26.12.2016
(51) Int. Cl.: B60C 23/04, G01L 17/00, F16K 15/20

(54) **TIRE-STATE DETECTION DEVICE**
VORRICHTUNG ZUR ERKENNUNG EINES REIFENZUSTANDES
DISPOSITIF DE DÉTECTION DE L'ÉTAT DE PNEUMATIQUES

(43) Date of publication of application: 29.08.2018
(73) Proprietor: Pacific Industrial Co., Ltd., Ogaki-shi, Gifu 503-8603 (JP)
(72) Inventor: YAMADA, Hirohisa, Ogaki-shi Gifu 503-8603 (JP)
(74) Representative: Daub, Thomas
(86) International application number: PCT/JP2016/088724
(87) International publication number: WO 2018/122925

(56) References cited:
- DE-A1-102014 119 430
- GB-A- 2 501 124
- JP-A- 2008 143 344
- US-A1- 2014 331 759
- US-A1- 2015 068 297

## Description

### TECHNICAL FIELD

The present invention relates to a tire condition detecting device.

### BACKGROUND ART

There is known a tire condition monitoring device that monitors a tire condition, such as air pressure, of a tire mounted on a wheel. The tire condition monitoring device includes a receiver and tire valve units each mounted on a wheel of a vehicle. The tire valve unit includes a tire condition detecting device and a tire valve attached to the tire condition detecting device. The tire condition detecting device includes a detecting section that detects a tire condition and a case that accommodates the detecting section.

Patent Document 1 describes a tire condition detecting device to which a clamp-in valve as a tire valve is attached. The clamp-in valve includes a valve stem made of metal. The valve stem of the clamp-in valve includes a flange portion and a fastening portion. The fastening portion is positioned near one axial end of the valve stem. The fastening portion includes a thread groove provided in the outer circumferential surface of the valve stem. The flange portion is positioned closer to one axial end of the valve stem than the fastening portion. When a tire valve unit including the clamp-in valve is mounted on a wheel, the clamp-in valve is inserted into an attachment hole provided in the wheel. At this time, a grommet is sandwiched between the flange portion and the wheel. Then, a fastening nut is screwed onto the fastening portion passed through the attachment hole so that the wheel is sandwiched by the fastening nut and the flange portion. This allows the tire valve unit to be mounted on the wheel. The tire condition detecting device described in Patent Document 1 places the center of gravity at a position away from the central axis of the clamp-in valve, thereby preventing the fastening nut from loosening by using centrifugal force generated during rotation of the wheel. Thus, the tire condition detecting device described in Patent Document 1 is a device dedicated for a clamp-in valve.

### PRIOR ART DOCUMENT

### Patent Documents

Patent Document 1: Japanese Laid-Open Patent Publication No. 2008-143344.

Document DE 10 2014 119430 A1 discloses a prior art wheel module wherein it would be possible to fasten it to a clamp-in valve and to a snap-in valve.

### SUMMARY OF THE INVENTION

### Problems that the Invention is to Solve

Tire valves include not only clamp-in valves but also snap-in valves. The tire condition detecting device of Patent Document 1 has a structure based on the premise that a clamp-in valve is attached, so that a snap-in valve cannot be attached. In addition, various types of clamp-in valves exist that vary in size and shape. Tire condition detecting devices are desired to allow attachment of multiple types of tire valves.

It is an object of the present invention to provide a tire condition detecting device to which different types of tire valves can be attached.

### Means for Solving the Problems

To achieve the foregoing objective, a tire condition detecting device is provided that includes a detecting section, which detects a condition of a tire, and a case, which accommodates the detecting section. The case includes an accommodation portion, which accommodates the detecting section, and a plurality of attachment portions. The attachment portions are configured to allow attachment of different types of tire valves.

The tire condition detecting device includes a plurality of attachment portions, so that the shape or the attachment position can be changed for each attachment portion. Thus, a tire valve different in type can be attached at each attachment portion, so that a plurality of types of tire valves can be attached to the tire condition detecting device.

In the above-described tire condition detecting device, the attachment portions may include an attachment portion for a snap-in valve that is configured to allow attachment of a snap-in valve and an attachment portion for a clamp-in valve that is configured to allow attachment of a clamp-in valve. The attachment portion for a snap-in valve may be arranged to be matched with a center of gravity of the tire condition detecting device. The attachment portion for a clamp-in valve may be arranged at a position at which a rotation radius of the case is not a minimum when the case is rotated around a rotation axis that is a central axis of a clamp-in valve attached to the attachment portion for a clamp-in valve.

The snap-in valve includes a body portion provided on the outer circumference of a valve stem. The attachment portion for a snap-in valve is arranged so as to be matched with the center of gravity of the tire condition detecting device, so that the snap-in valve is attached while being matched with the center of gravity of the tire condition detecting device. This prevents the snap-in valve from rotating around a rotation axis that is the central axis of the snap-in valve during rotation of the tire, so that the body portion is prevented from being twisted. Thus, deterioration of the body portion is reduced.

When a clamp-in valve is used as a tire valve, a fastening nut is screwed onto the clamp-in valve to attach the tire condition detecting device to the wheel. At this time, the case needs to be brought into contact with the wheel to restrict integral rotation of the fastening nut and the clamp-in valve. Since the rotation radius of the case around a rotation axis that is the central axis of the clamp-in valve is set so as not to be a minimum, the case can be easily brought into contact with the wheel.

### EFFECTS OF THE INVENTION

According to the present invention, different types of tire valves can be attached.

### BRIEF DESCRIPTION OF THE DRAWINGS

Fig. 1 is a perspective view illustrating a tire valve unit mounted on a wheel.
Fig. 2 is a cross-sectional view illustrating the tire valve unit mounted on the wheel.
Fig. 3 is a perspective view of the tire valve unit using a clamp-in valve as the tire valve.
Fig. 4 is a perspective view of the tire valve unit using a snap-in valve as the tire valve.
Fig. 5 is a perspective view of a transmitter.
Fig. 6 is a front view of a first attachment portion.
Fig. 7 is a plan view of a transmitter.
Fig. 8 is a perspective view of a snap-in valve.
Fig. 9 is a perspective view of a clamp-in valve.
Figs. 10A and 10B illustrate movement of the transmitter when the tire valve unit using a clamp-in valve as the tire valve is mounted on the wheel.
Fig. 11 is a perspective view of a tire valve unit of a modification.
Fig. 12 is a perspective view of a transmitter of a modification.
Fig. 13 is a cross-sectional view taken along line A-A of Fig 11, illustrating a tire valve unit of a modification.
Fig. 14 is a perspective view of a snap-in valve of a modification.

### MODES FOR CARRYING OUT THE INVENTION

A tire condition detecting device according to one embodiment will now be described.

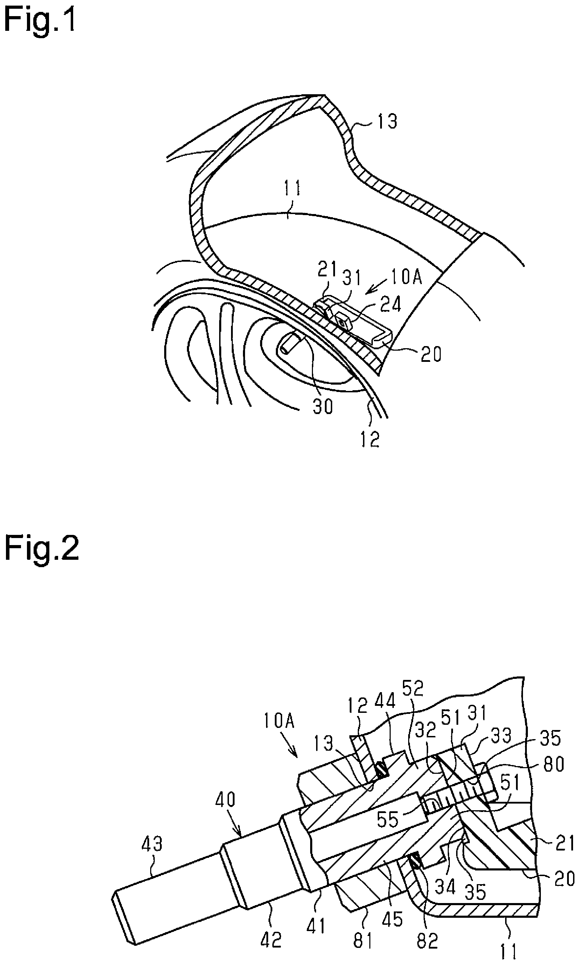

As illustrated in Figs. 1 and 2, a tire valve unit 10A is mounted on a wheel 11. The wheel 11 has a rim 12 provided with a circular attachment hole 13. A tire 14 is attached to the wheel 11.

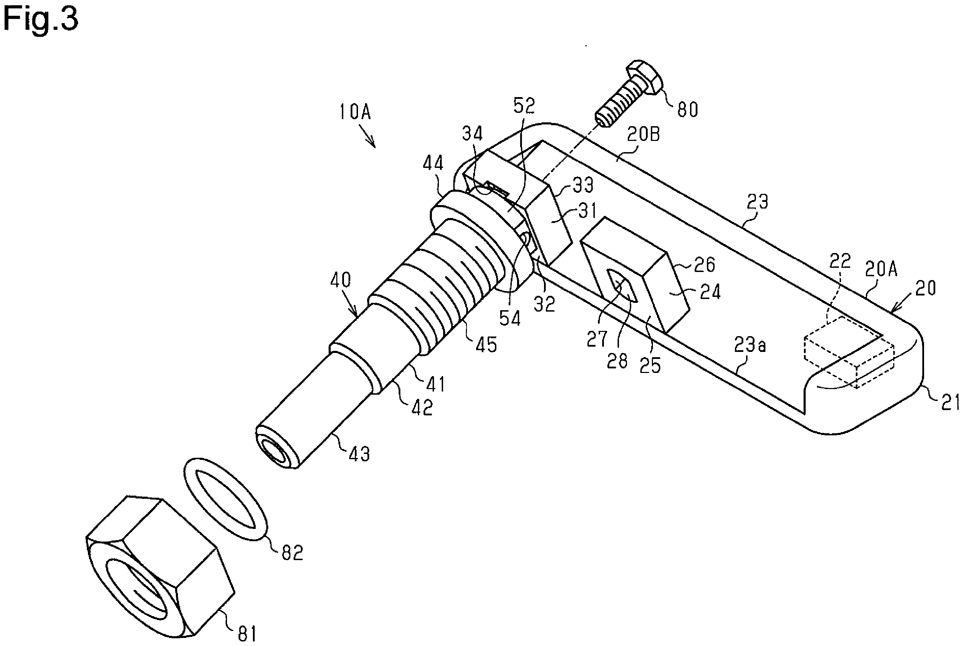

As illustrated in Fig. 3, the tire valve unit 10A includes a transmitter 20 as a tire condition detecting device, a clamp-in valve 40 attached to the transmitter 20, and a bolt 80 that fixes the clamp-in valve 40 to the transmitter 20.

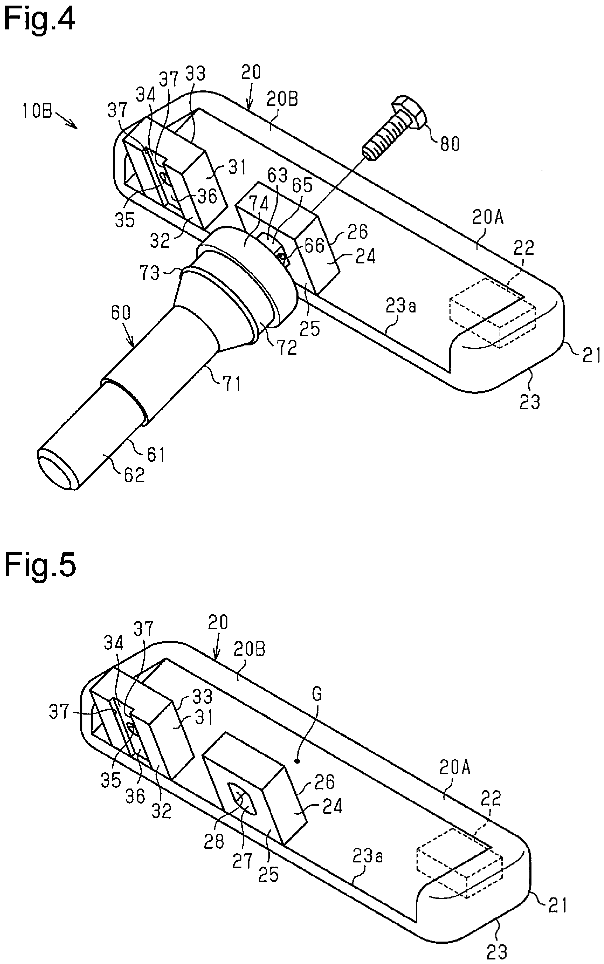

As illustrated in Fig. 4, a snap-in valve 60 is attached to the transmitter 20 instead of the clamp-in valve 40 to constitute a tire valve unit 10B including the transmitter 20, the snap-in valve 60, and the bolt 80. The same transmitter 20 is used both in a case in which the snap-in valve 60 is used as a tire valve and a case in which the clamp-in valve 40 is used as a tire valve. That is, the tire valve unit provided with the transmitter 20 and a tire valve includes the clamp-in valve 40 or the snap-in valve 60 as the tire valve. The clamp-in valve 40 and the snap-in valve 60 of the present embodiment are used in a four-wheel vehicle, for example.

As illustrated in Fig. 5, the transmitter 20 includes a case 21 and a pressure sensor 22 as a detecting section accommodated in the case 21. Although not illustrated, the transmitter 20 includes various electronic components, a battery, one or more antennas, a transmission circuit, and the like, in the case 21. The transmitter 20 transmits pressure data (air pressure data on the tire 14) detected by the pressure sensor 22 to a receiver. The receiver may be mounted on the vehicle or may be a portable terminal carried by the user. The receiver monitors the pressure in the tire 14, and sends a notification when there is an anomaly in the pressure in the tire 14.

The case 21 is made of plastic, for example. The case 21 includes an accommodation portion (accommodation body) 23 in the shape of a box in which the pressure sensor 22 and the like described above are accommodated, and attachment portions 24, 31 extending from the accommodation portion 23. The accommodation portion 23 and the attachment portions 24, 31 are integrally molded.

In the present embodiment, as an attachment portion, there are provided the first attachment portion 24 as an attachment portion for a snap-in valve, and the second attachment portion 31 as an attachment portion for a clamp-in valve. The first attachment portion 24 and the second attachment portion 31 are arranged side by side along one side (long side) 23a of the outer surface of the accommodation portion 23. Hereinafter, the direction along one side 23a is defined as a longitudinal direction of the accommodation portion 23. The center of gravity G of the transmitter 20 is positioned at the center of the accommodation portion 23 in the longitudinal direction by adjusting the positions of the electronic components and a pressure sensor 22 accommodated in the accommodation portion 23.

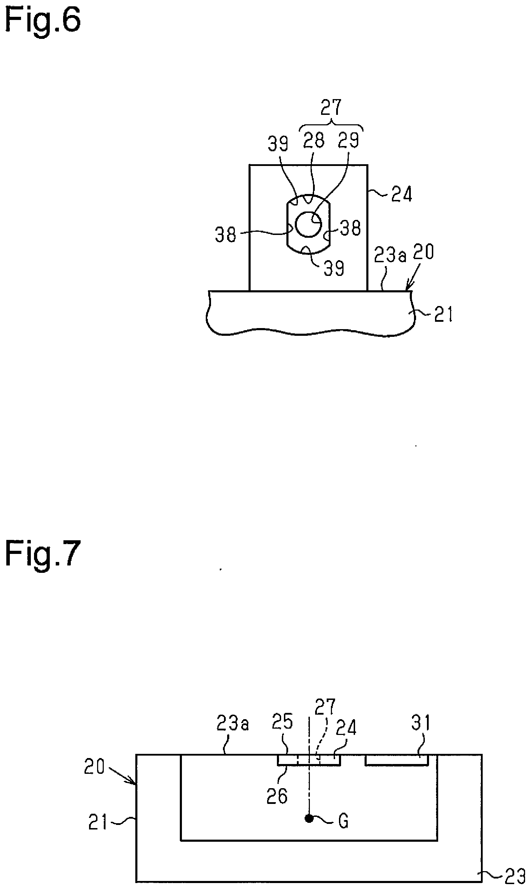

As illustrated in Figs. 5 and 6, the first attachment portion 24 is in the shape of a plate, and is provided at its one end in the thickness direction with a first surface 25 and at its other end in the thickness direction with a second surface 26. The first attachment portion 24 includes an insertion hole 27 extending through the first attachment portion 24 in its thickness direction. The insertion hole 27 includes a noncircular first hole 28 and a circular second hole 29. The first hole 28 and the second hole 29 are aligned in the axial direction of the insertion hole 27. The first hole 28 opens in the first surface 25, and the second hole 29 opens in the second surface 26. The first hole 28 includes two flat surfaces 38 parallel to each other, and two arcuate curved surfaces 39 connecting the flat surfaces 38 to each other, to constitute its inner circumferential surface.

As illustrated in Fig. 7, the first attachment portion 24 is arranged to be matched with the center of gravity G of the transmitter 20. A direction orthogonal to the central axis of the insertion hole 27 of the first attachment portion 24 and the longitudinal direction of the accommodation portion 23 is defined as a height direction of the accommodation portion 23. As viewed from the height direction, the central axis of the insertion hole 27 of the first attachment portion 24 is aligned with the center of gravity G of the transmitter 20. That is, the first attachment portion 24 is arranged at a position matched with the center of gravity G of the transmitter 20 in the longitudinal direction of the accommodation portion 23.

As illustrated in Fig. 5, the second attachment portion 31 is in the shape of a plate and is provided at its one end in the thickness direction with a first surface 32 and at the other end with a second surface 33. The second attachment portion 31 includes a fitting recess 34 recessed from the first surface 32 toward the second surface 33 in the thickness direction, and a fastening hole 35 extending from the fitting recess 34 toward the second surface 33. The fitting recess 34 extends to the opposite ends of the second attachment portion 31 in the extending direction from the accommodation portion 23, or extends from the proximal end of the second attachment portion 31 to the distal end. In the present embodiment, the fitting recess 34 extends throughout the second attachment portion 31 in the extending direction. The fitting recess 34 includes a bottom surface 36 parallel to the first surface 32, and two opposed surfaces (inner surfaces) 37 intersecting with the bottom surface 36. The two opposed surfaces 37 are parallel to each other, and the distance between the opposed surfaces 37 is uniform.

The second attachment portion 31 is arranged at a position different from the center of the accommodation portion 23 in the longitudinal direction. In the present embodiment, the center of gravity G of the transmitter 20 is positioned at the center of the accommodation portion 23 in the longitudinal direction, so that the central axis of the fastening hole 35 of the second attachment portion 31 are not aligned with the center of gravity G when the accommodation portion 23 is viewed from the height direction.

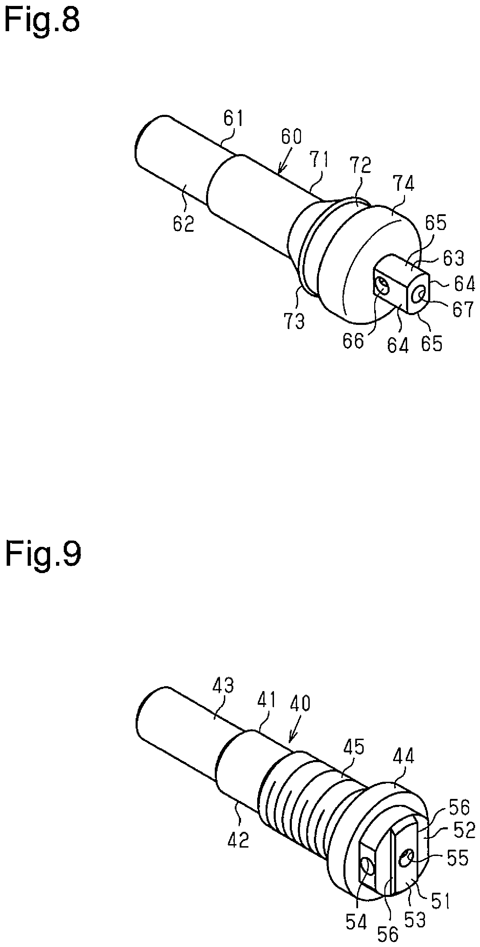

As illustrated in Fig. 8, the snap-in valve 60 includes a cylindrical valve stem 61 and a cylindrical body portion 71 provided on the outer circumference of the valve stem 61. The valve stem 61 is made of metal, and the body portion 71 is made of rubber. The valve stem 61 includes a built-in valve mechanism (not illustrated).

The opposite ends of the valve stem 61 project from the body portion 71. One of the opposite ends projecting from the body portion 71 is defined as an outer projecting portion 62, and the other is defined as an inner projecting portion 63. The outer projecting portion 62 is positioned outside the tire 14 when the tire valve unit 10B is mounted on the wheel 11. The inner projecting portion 63 is positioned inside the tire 14 when the tire valve unit 10B is mounted on the wheel 11.

The outer projecting portion 62 is cylindrical. Although not illustrated, a cap is mounted on the outer projecting portion 62 to prevent entry of foreign matter into the valve stem 61. The inner projecting portion 63 has an outline similar to the shape of the first hole 28 of the insertion hole 27. The inner projecting portion 63 is noncircular and tubular and includes two flat surfaces 64 parallel to each other and two arcuate curved surfaces 65 connecting the flat surfaces 64 to each other. The flat surfaces 64 and the curved surfaces 65 constitute the outer circumferential surface of the inner projecting portion 63. The inner projecting portion 63 is provided in its inner circumference with an internal thread hole 67.

The size of the inner projecting portion 63 in a direction orthogonal to the axial direction of the valve stem 61 not only allows the inner projecting portion 63 to be inserted into the first hole 28, but also restricts insertion of the inner projecting portion 63 into the second hole 29 from the first hole 28. In the dimensions of inner projecting portion 63 in the direction orthogonal to the axial direction of the valve stem 61, the longest dimension is less than the diameter of the outer projecting portion 62. That is, the inner projecting portion 63 is thinner than the outer projecting portion 62. The inner projecting portion 63 includes a vent hole 66 extending in the direction orthogonal to the axial direction of the valve stem 61. The vent hole 66 connects the outer circumferential surface of the inner projecting portion 63 and the inner circumferential surface thereof to each other. In the present embodiment, the vent hole 66 opens in each of the flat surfaces 64 of the inner projecting portion 63.

A part of the body portion 71 increases in diameter from the outer projecting portion 62 toward the inner projecting portion 63. A part of the body portion 71 is provided with a mounting groove 72, which is recessed all around the body portion 71. The body portion 71 includes a first holding portion 73 and a second holding portion 74 on the opposite sides of the mounting groove 72 in the axial direction of the valve stem 61. The first holding portion 73 is arranged on the side corresponding to the outer projecting portion 62, and the second holding portion 74 is arranged on the side corresponding to the inner projecting portion 63. The diameter of each of the first holding portion 73 and the second holding portion 74 is greater than the diameter of body portion 71 in the mounting groove 72. Before the tire valve unit 10B is mounted on the wheel 11, the diameter of the body portion 71 in the mounting groove 72 is greater than the diameter of the attachment hole 13.

When the snap-in valve 60 is used as a tire valve used in the tire valve unit, the inner projecting portion 63 of the snap-in valve 60 is inserted into the insertion hole 27 of the first attachment portion 24. Then, the bolt 80 inserted into the second hole 29 of the insertion hole 27 is screwed into the internal thread hole 67 of the inner projecting portion 63 to constitute the tire valve unit 10B, in which the transmitter 20 and the snap-in valve 60 are integrated with each other. At this time, each of the flat surfaces 64 of the inner projecting portion 63 is brought into contact with the inner circumferential surface of the first hole 28 to restrict turning of the snap-in valve 60. The central axis of the snap-in valve 60 is aligned with the central axis of the insertion hole 27. Thus, when the accommodation portion 23 is viewed from the height direction, the central axis of the snap-in valve 60 is aligned with the center of gravity G of the transmitter 20.

As illustrated in Fig. 9, the clamp-in valve 40 includes a cylindrical valve stem 41. The valve stem 41 is made of metal. The valve stem 41 includes a built-in valve mechanism (not illustrated). The valve stem 41 includes a stem main body 42 and a valve attachment portion 51 integrated with the stem main body 42. The stem main body 42 and the valve attachment portion 51 are aligned in the axial direction of the valve stem 41.

The stem main body 42 is provided at its one axial end with an outer end portion 43 and at its other axial end with a flange portion 44. The stem main body 42 includes a fastening portion 45 between the outer end portion 43 and the flange portion 44 in its axial direction. The outer end portion 43 is positioned outside the tire 14 when the tire valve unit 10A is mounted on the wheel 11. The flange portion 44 is positioned inside the tire 14 when the tire valve unit 10A is mounted on the wheel 11.

Although not illustrated, a cap is mounted on the outer end portion 43 to prevent entry of foreign matter into the valve stem 41. The fastening portion 45 is a portion including a thread groove provided in the outer circumferential surface of the valve stem 41, and serves as an external thread.

As illustrated in Fig. 3, a fastening nut 81 is screwed onto the fastening portion 45. The fastening portion 45 has a diameter that is slightly smaller than the diameter of the attachment hole 13 of the wheel 11. The flange portion 44 is a portion in which the valve stem 41 is locally enlarged in diameter and has a diameter greater than the diameter of the attachment hole 13. That is, the flange portion 44 is restricted from passing through the attachment hole 13.

As illustrated in Fig. 9, the valve attachment portion 51 includes a cylindrical continuous portion 52, which is provided continuously with the flange portion 44, and a fitting protrusion 53, which protrudes from the end face of the continuous portion 52 in the axial direction of the valve stem 41. The continuous portion 52 includes a vent hole 54 extending in a direction orthogonal to the axial direction of the valve stem 41. The vent hole 54 connects the inner circumferential surface and the outer circumferential surface of the continuous portion 52 to each other. In addition, the fitting protrusion 53 includes a valve fastening hole 55 extending in the axial direction of the valve stem 41. The valve fastening hole 55 has an internal thread on the inner circumferential surface.

The fitting protrusion 53 protrudes from the end face of the flange portion 44 in the axial direction of the valve stem 41. The fitting protrusion 53 extends to the edge of the continuous portion 52. The fitting protrusion 53 includes two valve-side opposed surfaces 56 intersecting with the continuous portion 52. The two valve-side opposed surfaces 56 are parallel to each other. The distance between the valve-side opposed surfaces 56 is slightly less than the distance between the opposed surfaces 37 of the fitting recess 34. The dimension of the valve-side opposed surfaces 56 in a direction orthogonal to the axial direction of the valve stem 41 is longer than the dimension of flat surfaces 64 of an inner projecting portion 63 in a direction orthogonal to the axial direction a valve stem 61.

When the clamp-in valve 40 is used as the tire valve used in the tire valve unit, the fitting protrusion 53 of the clamp-in valve 40 is fitted into the fitting recess 34 of the second attachment portion 31. Then, the bolt 80 passed through the fastening hole 35 is fastened into the valve fastening hole 55 to constitute the tire valve unit 10A, in which the transmitter 20 and the clamp-in valve 40 are integrated with each other. At this time, the valve-side opposed surfaces 56 of the fitting protrusion 53 are brought into contact with the corresponding opposed surfaces 37 of the fitting recess 34, thereby restricting rotation of the clamp-in valve 40. The central axis of the fastening hole 35 is aligned with the central axis of the clamp-in valve 40. Thus, when the accommodation portion 23 is viewed from the height direction, the central axis of the clamp-in valve 40 are not aligned with the center of gravity G of the transmitter 20.

The maximum dimension in the radial direction from the central axis of the clamp-in valve 40 to a portion at which the fitting protrusion 53 and the fitting recess 34 are brought into contact with each other is longer than the maximum dimension in the radial direction from the central axis of the snap-in valve 60 to a portion at which the inner projecting portion 63 and the first hole 28 are brought into contact with each other. That is, in a direction orthogonal to the central axis of the tire valve, a part of the clamp-in valve 40 is brought into contact with the case 21 at a position outward from the snap-in valve 60.

Subsequently, operation of the transmitter 20 of the present embodiment will be described.

When the tire valve unit 10B provided with the snap-in valve 60 is mounted on the wheel 11, the outer projecting portion 62 of the snap-in valve 60 is inserted into the attachment hole 13 from the inside of the wheel 11. The body portion 71 is press-fitted into the attachment hole 13 while being elastically deformed. When the snap-in valve 60 is inserted into the attachment hole 13 until the mounting groove 72 reaches a position in the attachment hole 13, the mounting groove 72 and the attachment hole 13 are brought into close contact with each other to mount the tire valve unit 10B on the wheel 11. Then, the body portion 71 ensures sealability inside and outside the tire 14. The tire valve unit 10B is attached to the wheel 11 such that the central axis of the snap-in valve 60 and the center of gravity G of the transmitter 20 are aligned with each other when the accommodation portion 23 is viewed from the radial direction of the wheel 11, which is a direction in which centrifugal force acts during rotation of the wheel 11. It can be also said that the longitudinal direction of the accommodation portion 23 is a direction orthogonal to the central axis of the insertion hole 27 of the first attachment portion 24 as viewed from the radial direction of the wheel 11. The inside of the wheel 11 is a portion positioned inside the tire 14 when the tire 14 is mounted on the wheel 11, and the outside of the wheel 11 is a portion positioned outside the tire 14 when the tire 14 is mounted on the wheel 11.

During traveling of the vehicle, the tire 14 and the wheel 11 rotate to cause centrifugal force to act on the tire valve unit 10B. This centrifugal force applies force to the body portion 71.

When centrifugal force acts on the transmitter 20, force is applied to the snap-in valve 60 attached to the transmitter 20. A part of the transmitter 20 on one side of the central axis of the snap-in valve 60 in the longitudinal direction of the accommodation portion 23 is defined as a first portion 20A, and the remainder is defined as a second portion 20B. When there is a difference in weight between the first portion 20A and the second portion 20B, the difference in weight generates rotational force in the snap-in valve 60.

The present embodiment is configured such that the central axis of the snap-in valve 60 passes through the center of gravity G of the transmitter 20 when the accommodation portion 23 is viewed from the height direction. There is a small difference in weight between the first portion 20A and the second portion 20B, which are divided by the central axis of the snap-in valve 60 in the longitudinal direction. Thus, rotational force is less likely to be generated in the snap-in valve 60, so that the body portion 71 is less likely to be twisted.

As illustrated in Figs. 2 and 3, when the tire valve unit 10A provided with the clamp-in valve 40 is mounted on the wheel 11, the outer end portion 43 of the clamp-in valve 40 is inserted into an annular grommet 82 and the attachment hole 13 of the wheel 11. In the present embodiment, the outer end portion 43 is inserted from the inside of the wheel 11 to the outside the wheel 11. The grommet 82 is a component that seals inside and outside the tire 14 and is made of rubber, for example.

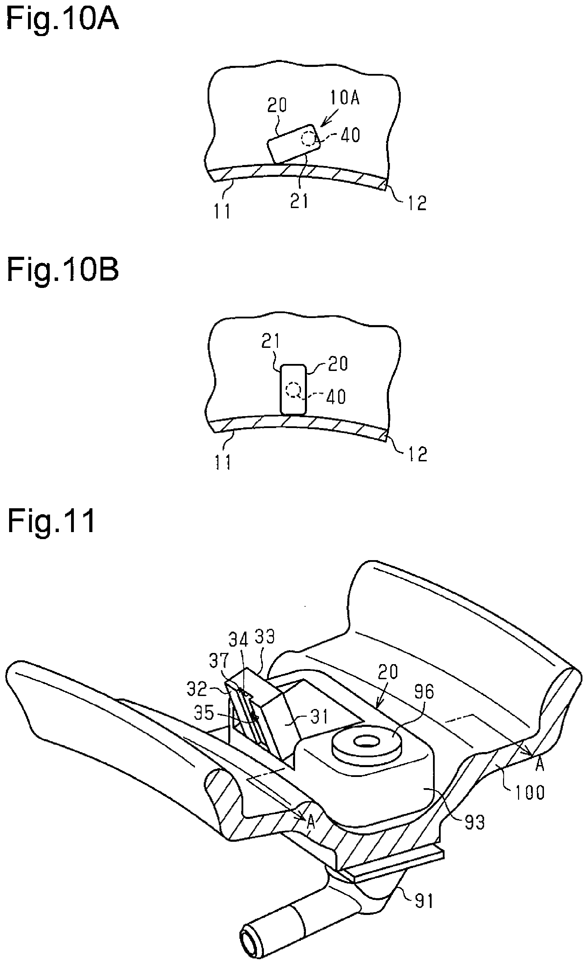

Subsequently, the fastening nut 81 is screwed onto the fastening portion 45 extending through the attachment hole. When the fastening nut 81 is turned, the fastening nut 81 and the tire valve unit 10A are turned together. As illustrated in Fig. 10A, when the tire valve unit 10A is turned together with the fastening nut 81, a part of the case 21 is brought into contact with the wheel 11 to restrict turning of the tire valve unit 10A. When the fastening nut 81 is turned in this condition, the fastening nut 81 is screwed onto the fastening portion 45. That is, the fastening nut 81 is screwed onto the fastening portion 45 by using reaction force acting on the clamp-in valve 40 from the case 21. When the fastening nut 81 is screwed, the sealability inside and outside the tire 14 is ensured by the grommet 82 sandwiched between the flange portion 44 and the wheel 11.

As described above, when the clamp-in valve 40 is used as a tire valve, integral rotation of the fastening nut 81 and the tire valve unit 10A is restricted by bringing the transmitter 20 into contact with the wheel 11 to restrict rotation of the transmitter 20. As illustrated in Fig. 10B, when the rotation radius of the transmitter 20 around a rotation axis that is the central axis of the clamp-in valve 40 is small, the transmitter 20 is not brought into contact with the wheel 11, and thus integral rotation of the fastening nut 81 and the tire valve unit 10A cannot be restricted.

The rotation radius of the transmitter 20 is the maximum distance in distances from the central axis of the clamp-in valve 40 to the edge of the accommodation portion 23 in the longitudinal direction. That is, the rotation radius of the transmitter 20 becomes minimum when the clamp-in valve 40 is attached at the center of the accommodation portion 23 in the longitudinal direction, as illustrated in Fig. 10B. The farther away the position at which the clamp-in valve 40 is attached from the center of the accommodation portion 23 in the longitudinal direction, the longer becomes the rotation radius of the transmitter 20. In the present embodiment, the clamp-in valve 40 is provided at a position different from the center position of the accommodation portion 23 in the longitudinal direction, so that the rotation radius increases as compared with a case in which the clamp-in valve 40 is provided at the center thereof in the longitudinal direction.

In addition, the central axis of the clamp-in valve 40 is positioned away from the center of gravity G of the transmitter 20, so that a weight difference is caused between the parts of the transmitter 20 on the opposite sides of the central axis of the clamp-in valve 40 in the longitudinal direction of the accommodation portion 23. As a result, the weight difference between the two portions of the transmitter 20 divided by the central axis of the clamp-in valve 40 in the longitudinal direction of the accommodation portion 23 causes rotational force in the clamp-in valve 40. The present embodiment aligns the direction in which the rotational force described above is caused and the direction in which the fastening nut 81 is tightened.

The above-described embodiment achieves the following advantages.
(1) The case 21 of the transmitter 20 includes the first attachment portion 24 and the second attachment portion 31. Thus, a different type of tire valve can be attached to each of the attachment portions 24 and 31. Different types of tire valves can be attached to the same transmitter 20, so that the transmitter 20 can be shared by different types of tire valves. Thus, the manufacturing costs of the transmitter 20 are reduced as compared with a case in which a different type of transmitter is used for each type of tire valve.
(2) The first attachment portion 24 and the second attachment portion 31 are each arranged at a different position in the longitudinal direction of the accommodation portion 23. Specifically, the first attachment portion 24, to which the snap-in valve 60 is attached, is arranged while being matched with the center of gravity G of the transmitter 20. This reduces the weight difference between the first portion 20A and the second portion 20B, which are defined by dividing the transmitter 20 into two by the central axis of the snap-in valve 60 in the longitudinal direction of the accommodation portion 23, so that twisting force caused by centrifugal force during rotation of the wheel 11 is less likely to be applied to the body portion 71. Thus, deterioration of the body portion 71 is reduced.
   The second attachment portion 31, to which the clamp-in valve 40 is attached, is provided at a position different from the center of the accommodation portion 23 in the longitudinal direction, and thus is attached to a position different from the position allowing the transmitter 20 to have a minimum rotation radius. Thus, integral rotation of the fastening nut 81 and the tire valve unit 10A can be restricted by preventing the transmitter 20 from not being brought into contact with the wheel 11 when the tire valve unit 10B is attached with the fastening nut 81.
(3) When the direction in which rotational force caused in the clamp-in valve 40 during rotation of the wheel 11 is applied and the direction in which the fastening nut 81 is tightened are configured to be matched with each other, the fastening nut 81 can be screwed by using centrifugal force when the grommet 82 is contracted due to aging degradation and the like. This enables prevention against deterioration of sealability inside and outside the tire 14 due to shrinkage of the grommet 82.
(4) When the first attachment portion 24 for the snap-in valve 60 and the second attachment portion 31 for the clamp-in valve 40 are individually provided, the structure of each of the attachment portions 24 and 31 can be made suitable for a tire valve to be attached.

When the snap-in valve 60 is used as a tire valve, it is desired to reduce the weight of the tire valve unit 10B to reduce the force to be applied to the body portion 71 due to centrifugal force caused during rotation of the wheel 11. Meanwhile, when the clamp-in valve 40 is used as a tire valve, it is desired to ensure strength of the attachment portion to bear force to be applied to the attachment portion when the fastening nut 81 is screwed.

If an attachment portion provided with an insertion hole to which a part of a tire valve is inserted is formed such that both the snap-in valve 60 and the clamp-in valve 40 can be individually attached to the attachment portion, a part of the snap-in valve 60 and a part of the clamp-in valve 40 are individually inserted into the insertion hole. In this case, the outline of the part of the clamp-in valve 40 to be inserted into the insertion hole and the outline of the part (inner projecting portion 63) of the snap-in valve 60 to be inserted into the insertion hole have the same shape. Thus, when the inner projecting portion 63 of the snap-in valve 60 is made thin to reduce the weight of the tire valve unit 10B, the part of the clamp-in valve 40 to be inserted into the insertion hole is also made thin. When the part of the clamp-in valve 40 to be inserted into the insertion hole is made thin, force acting on the attachment portion increases when the tire valve unit 10A is attached to the wheel 11 with the fastening nut 81. This is because force applied to the case 21 increases as approaching the central axis of the tire valve.

On the other hand, when the part of the clamp-in valve 40 to be inserted into the insertion hole is thickened to reduce force applied to the attachment portion by screwing the fastening nut 81 onto the clamp-in valve 40, the inner projecting portion 63 of the snap-in valve 60 also is thickened. In this case, weight of the snap-in valve 60 increases. Thus, when one attachment portion is configured to allow the snap-in valve 60 and the clamp-in valve 40 to be individually attached to the one attachment portion, requirements for each tire valve may not be satisfied.

In the present embodiment, an attachment portion is provided in accordance with the type of tire valve, so that the shape and the placement position of the attachment portion can be determined in accordance with the requirements for each type. Thus, the inner projecting portion 63 of the snap-in valve 60 can be made thin, and also the strength of the attachment portion (second attachment portion 31) when the clamp-in valve 40 is used is ensured.

The above-described embodiment may be modified as follows.

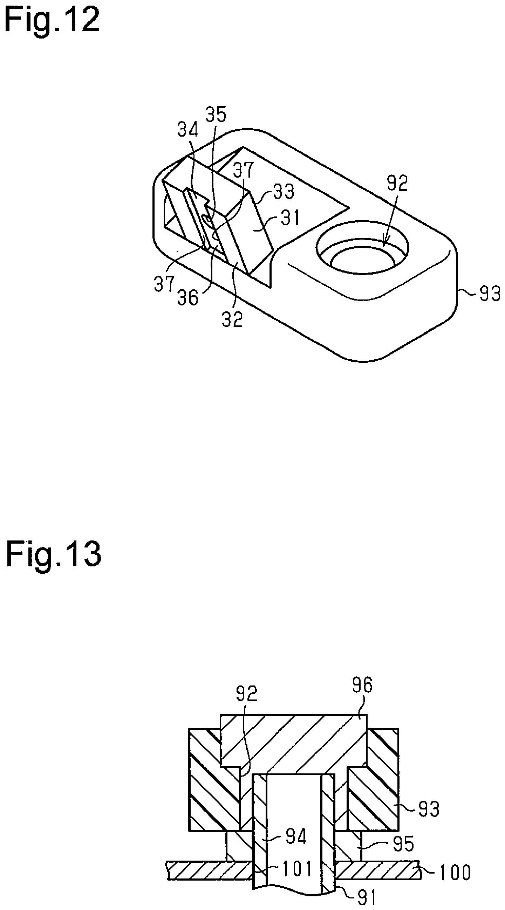

As illustrated in Figs. 11 and 12, the transmitter 20 may include the attachment portion 31, to which the clamp-in valve 40 is attached, and an attachment portion 92 to which a clamp-in valve 91 for a two-wheeled vehicle is attached. The attachment portion 92 is a through-hole extending through a case 93 of the transmitter 20.

As illustrated in Fig. 11, the clamp-in valve 91 for a two-wheeled vehicle is bent midway in its axial direction, and is different in shape from the clamp-in valve 40 used for a four-wheel vehicle.

As illustrated in Fig. 13, the clamp-in valve 91 is provided at its one axial end with a fastening portion 94. The fastening portion 94 has an external thread on the outer circumferential surface. The fastening portion 94 is inserted into an attachment hole 101 provided in a wheel 100 of a two-wheeled vehicle. A fastening nut 95 is screwed onto the fastening portion 94 inserted into the attachment hole 101. This allows the clamp-in valve 91 to be attached to the wheel 100. The fastening portion 94 projects into the attachment portion 92 of the case 93. A flange nut 96 is screwed onto the fastening portion 94, which projects into the attachment portion 92. A flange of the flange nut 96 is fitted into the case 93 to integrate the clamp-in valve 91 and the transmitter 20 with each other.

As described above, there are multiple types of clamp-in valves that are different in size and shape. Likewise, there are multiple types of snap-in valves that are different in size and shape. Thus, the transmitter 20 may include an attachment portion suitable for multiple types of snap-in valves, or may include an attachment portion suitable for multiple types of clamp-in valve. That is, the attachment portions are not limited to the attachment portion for a snap-in valve and the attachment portion for a clamp-in valve.

The number of attachment portions may be as necessary changed if it is two or more.

The first attachment portion 24 does not need to be matched with the center of gravity G of the transmitter 20.

The center of gravity G of the transmitter 20 may be a position different from the center of the transmitter 20 in its longitudinal direction. In this case, a position of the first attachment portion 24 may be changed so as to be matched with the center of gravity G of the transmitter 20.

The central axis of the insertion hole 27 of the first attachment portion 24 may be slightly displaced from the center of gravity G of the transmitter 20. That is, matching the first attachment portion 24 with the center of gravity G of the transmitter 20 include not only the a case where the insertion hole 27 and the center of gravity G are overlapped with each other, but also a case where the central axis of the insertion hole 27 and the center of gravity G are displaced from each other within a range of manufacturing tolerances, for example.

The second attachment portion 31 may be provided at the center of the accommodation portion 23 in the longitudinal direction as long as the transmitter 20 can be brought into contact with the wheel 11 when the fastening nut 81 is screwed.

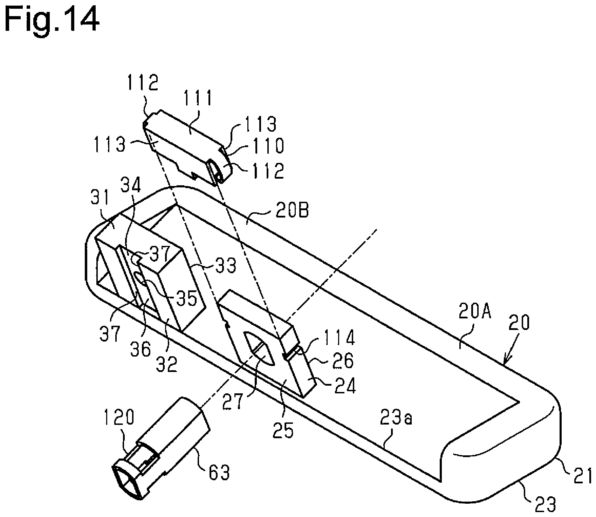

As illustrated in Fig. 14, a tire valve may be fixed to the case 21 with a component other than the bolt 80. As illustrated in Fig. 14, a fixing tool 110 includes a rectangular plate-shaped coupling portion 111, arm portions 112 extending from a pair of sides extending in the transverse direction of the coupling portion 111, and locking portions 113 extending from a pair of sides extending in the longitudinal direction of the coupling portion 111. The fixing tool 110 is made of metal. The two arm portions 112 extend from corresponding places of the coupling portion 111 while being curved toward the same direction. The arm portions 112 are hooked in respective grooves 114 provided in the first attachment portion 24 to be fixed to the first attachment portion 24.

When the fixing tool 110 described above is used, the inner projecting portion 63 of the snap-in valve 60 is provided with a through-hole 120 extending through the circumferential wall thereof.

The fixing tool 110 is provided such that the first attachment portion 24 is inserted between the locking portions 113. Then, the locking portions 113 project into the inner projecting portion 63 through the through-hole 120. This restricts axial movement of the snap-in valve 60, and the snap-in valve 60 is attached to the case 21. When the fixing tool 110 described above is used, the insertion hole 27 has the same size throughout the range from the first surface 25 to the second surface 26.

The inner projecting portion 63 of the snap-in valve 60 may be in the shape of a perfect circle as long as rotation of the snap-in valve 60 can be restricted when the bolt 80 is screwed into the inner projecting portion 63 of the snap-in valve 60. Likewise, the insertion hole 27 of the first attachment portion 24 may be in the shape of a perfect circle. Even when a fixing tool that does not apply rotational force to the snap-in valve 60 is used as the fixing tool, the inner projecting portion 63 of the snap-in valve 60 may be in the shape of a perfect circle.

The inner projecting portion 63 of the snap-in valve 60 may be in a polygonal shape such as a quadrangular shape or in an elliptic shape. In this case, the shape of the insertion hole 27 is also changed in accordance with the shape of the inner projecting portion 63.

The valve attachment portion 51 does not need to include the continuous portion 52. In this case, the fitting protrusion 53 is provided continuously to the flange portion 44. The vent hole 54 is provided in either the flange portion 44 or the fitting protrusion 53.

The outline of the inner projecting portion 63 and the shape of the first hole 28 of the insertion hole 27 do not need to be similar to each other as long as the snap-in valve 60 can be attached to the first attachment portion 24.

The fitting recess 34 may extend in a direction intersecting with the extending direction of the attachment portion 24. In addition, the fitting recess 34 does not need to extend to reach the edge of the attachment portion 24. That is, the fitting recess 34 may have any size and shape as long as the fitting protrusion 53 can be fitted.

The attachment portion may be a part of the case 21, such as a part of a wall portion constituting the accommodation portion 23. That is, a part of the accommodation portion 23 may serve as the attachment portion.

As a detecting section, a sensor other than the pressure sensor 22, such as a temperature sensor that detects temperature in the tire 14, and an acceleration sensor that detects centrifugal force acting on a wheel, may be used.

### DESCRIPTION OF THE REFERENCE NUMERALS

10A, 10B ... Tire Valve Unit, 20 ... Transmitter (Tire Condition Detecting Device), 21 ... Case, 22 ... Pressure Sensor (Detecting Section), 23 ... Accommodation Portion, 24 ... First Attachment Portion (Attachment Portion for Snap-In Valve), 31 ... Second Attachment Portion (Attachment Portion for Clamp-In Valve), 40 ... Clamp-In Valve, 60 ... Snap-In Valve.

## Claims

1. A tire condition detecting device (20) comprising:
a detecting section (22), which detects a condition of a tire; and
a case (21), which accommodates the detecting section (22), wherein
the case (21) includes
an accommodation portion (23), which accommodates the detecting section (22), and
a plurality of attachment portions (24, 31, 92),
the attachment portions (24, 31) are configured to allow attachment of different types of tire valves (40, 60, 91), **characterized in that** the attachment portions (24, 31, 92) include
an attachment portion (24) for a snap-in valve (60) that is configured to allow attachment of a snap-in valve (60), and
an attachment portion (31, 92) for a clamp-in valve (40, 91) that is configured to allow attachment of a clamp-in valve (40, 91),
the attachment portion (24) for a snap-in valve (60) is arranged to be matched with a center of gravity of the tire condition detecting device (20), and
the attachment portion (31, 92) for a clamp-in valve (40, 91) is arranged at a position at which a rotation radius of the case (21) is not a minimum when the case (21) is rotated around a rotation axis that is a central axis of a clamp-in valve (40, 91) attached to the attachment portion (31, 92) for a clamp-in valve (40, 91).

## Patentansprüche

1. Eine Reifenzustandserfassungsvorrichtung (20), welche umfasst:
eine Erfassungseinheit (22), welche einen Zustand eines Reifens erfasst;
ein Gehäuse (21), in dem die Erfassungseinheit (22) aufgenommen ist, wobei das Gehäuse (21) aufweist:
einen Aufnahmebereich (23), in dem die Erfassungseinheit (22) aufgenommen ist, sowie
eine Vielzahl von Anbindungsbereichen (24, 31, 92),
wobei die Anbindungsbereiche (24, 31) dazu eingerichtet sind, eine Anbindung unterschiedlicher Typen von Reifenventilen (40, 60, 91) zu ermöglichen,
**dadurch gekennzeichnet, dass** die Anbindungsbereiche (24, 31, 92)
einen Anbindungsbereich (24) für ein Einrastventil (60) aufweisen, welcher dazu eingerichtet ist, eine Anbindung eines Einrastventils (60) zu ermöglichen,
und einen Anbindungsbereich (31, 92) für ein Klemmventil (40, 91) aufweisen, welcher dazu eingerichtet ist, eine Anbindung eines Klemmventils (40, 91) zu ermöglichen,
dass der Anbindungsbereich (24) für ein Einrastventil (60) so angeordnet ist, dass er auf einen Gewichtsschwerpunkt der Reifenzustandserfassungsvorrichtung (20) ausgerichtet ist,
und dass der Anbindungsbereich (31, 92) für ein Klemmventil (40, 91) in einer Position angeordnet ist, in der ein Rotationsradius des Gehäuses (21) nicht minimal ist, wenn das Gehäuse (21) um eine Rotationsachse rotiert wird, welche eine am Anbindungsbereich (31, 92) für ein Klemmventil (40, 91) angebrachte Mittelachse eines Klemmventils (40, 91) ist.

## Revendications

1. Un dispositif de détection d'état de pneu (20) comprenant
une unité détecteur (22) qui détecte un état d'un pneu; et
un boîtier (21) dans lequel l'unité détecteur (22) est reçu, le boîtier (21) incluant
une région d'accueil (23) dans laquelle l'unité détecteur (22) est reçue, et
une pluralité de régions d'attachement (24, 31, 92),
les régions d'attachement (24, 31) étant configurées à permettre un attachement de types différents de valves de pneu (40, 60, 91),
**caractérisé en ce que**
les régions d'attachement (24, 31, 92) comportent
une région d'attachement (24) pour une valve à encliquetage (60), configurée à permettre l'attachement d'une valve à encliquetage (60) et
une région d'attachement (31, 92) pour une valve à serrage (40, 91) configurée à permettre l'attachement d'une valve à serrage (40, 91),
que la région d'attachement (24) pour une valve à encliquetage (60) est disposée de telle manière qu'elle s'aligne sur un centre de gravité du dispositif de détection d'état de pneu (20)
et que la région d'attachement (31, 92) pour une valve à serrage (40, 91) est disposée dans une position dans laquelle un radius de rotation du boîtier (21) n'est pas au minimum si le boîtier (21) est fait tourner autour d'un axe de rotation qui est l'axe central d'une valve à serrage (40, 91) attachée à la région d'attachement (31, 92) pour une valve à serrage (40, 91).
